# EUROPEAN PATENT APPLICATION

(11) **EP 0 980 904 A1**
(43) Date of publication of application: **23.02.2000**
(21) Application number: 98957182.3
(22) Date of filing: 04.12.1998
(51) Int. Cl.: C09K 3/12, C04B 28/02

(54) **OSMOTIC WATERPROOFING AGENT, WATERPROOFING MATERIAL, CONCRETE OR MORTAR COMPOSITION, AND METHOD FOR PREVENTING SEEPAGE**

(30) Priority: 09.12.1997 JP 35409497
(71) Applicant: Nippon Kayaku Kabushiki Kaisha, Tokyo 102-8172 (JP)
(72) Inventor: MAEHARA, Kiyoshi, Saitama 362-0063 (JP); OGAWA, Masanobu, Gunma 375-0013 (JP); IGUCHI, Tutomu, Gunma 370-1201 (JP); IKEDA, Koichi, Gunma 370-0802 (JP); TAMURA, Wakako, Gunma 375-0054 (JP); ITO, Yuji, Tokyo 142-0062 (JP)
(74) Representative: Türk - Gille - Hrabal - Struck
(86) International application number: JP9805492
(87) International publication number: WO9929798

(57) **Abstract**

The present invention is to provide a water cut-off agent capable of being applied in a simple manner and having excellent cut-off capabilities. The permeable water cut-off agent of the present invention comprises, as the essential components, a hydrophilic resin and a gellant for the resin. It may be wrapped with a water-pervious material, or may be mixed with water for spread, or may be impregnated into films or spongy substances. Mixing the permeable water cut-off agent of the present invention with a cement or mortar composition gives waterproof construction materials.

## Description

### TECHNICAL FIELD

The present invention relates to a permeable water cut-off agent with good water cut-off capabilities, more precisely to a permeable water cut-off agent that can penetrate into cracks or holes causing water leaks, filling the gaps thereby to prevent water from penetrating therethrough.

### BACKGROUND OF THE INVENTION

To prevent water leaks in roofs, floors and walls, the sites into which water penetrates to cause water leaks therein, such as holes, cracks or gaps, are coated or filled with a sealant. However, for those in which the water-leaking sites are not clear, it is extremely difficult to identify the sites into which water penetrates to cause water leaks, and most of those cases could not be repaired by such simple coating or filling with a sealant. Such cases therefore require complete re-roofing, complete re-covering with fresh waterproof sheets, and, for walls, even complete spray coating or complete re-tiling.

The guarantee term for no leak in buildings is often long, for example, for a period of 5 to 10 years or so, and within the guarantee term, building constructors are obliged to pay the costly expenses for repairing the leakage sites, if any, and after the term has expired, building owners manage to pay them.

In this connection, JP-B-7-96672 discloses a spreading leak-preventing agent for sealing cracks that cause water leaks, with a water-insoluble powdery substance. However, the agent disclosed is defective in that the water-insoluble powdery substance precipitates therein during storage, or that is, the storage stability of the agent is poor. In this connection, JP-A-5-140537 discloses one means for solving the problem of precipitation, for which is used a silica sol dispersion. However, the silica sol dispersion used in the method is often lost when the agent comprising it is frozen in the environment below the freezing point, and, in those conditions, the agent may give precipitates. Therefore, the technique disclosed can not still ensure the storage stability of the agent.

Given that situation, it is desired to develop a leak-preventing agent with good storage stability, which is inexpensive and can be applied to constructions without taking time and without detracting from the outward appearance of the constructions to which it has been applied.

### DISCLOSURE OF THE INVENTION

We, the present inventors have assiduously studied so as to solve the problems mentioned above, and, as a result, have achieved the present invention. Specifically, the present invention relates to the following:
(1) A permeable water cut-off agent, which comprises a gelable hydrophilic resin and a gellant for said hydrophilic resin;
(2) The permeable water cut-off agent of (1), which comprises a surfactant;
(3) The permeable water cut-off agent of (2), which comprises a water-insoluble powdery substance;
(4) The permeable water cut-off agent of (2), wherein the gelable hydrophilic resin is one or more selected from the group consisting of gelable highly water-absorbing polymers, polyvinyl acetates and polyvinyl alcohols;
(5) The permeable water cut-off agent of any one of (1) to (4), which comprises water;
(6) The permeable water cut-off agent of (5), which is thixotropic and has a thixotropic index of not smaller than 1.5;
(7) The permeable water cut-off agent of (5) or (6), which comprises a polyalcohol;
(8) The permeable water cut-off agent of (1), which comprises a composition A containing both of a gelable hydrophilic resin and a surfactant or the three of a gelable hydrophilic resin, a surfactant and water, and a composition B containing a gellant for the hydrophilic resin or both of a gellant for the hydrophilic resin and water;
(9) A method for preventing water leaks, which comprises pouring or injecting the permeable water cut-off agent of (5) or (6) into a construction through openings formed therefor in the construction;
(10) A method for preventing water leaks, which comprises spreading either one of a composition A containing a gelable hydrophilic resin, a surfactant and water and a composition B containing a surfactant, a gellant for the hydrophilic resin and water on a part to be spread therewith, followed by spreading the other on nearly the same part as previously spread;
(11) A water cut-off material which is prepared by impregnating the permeable water cut-off agent of (5) or (6) into a spongy substance;
(12) A water cut-off material as prepared by impregnating the permeable water cut-off agent of (5) or (6) into a cloth, a rope, a film or a sheet, through coating or dipping;
(13) A water cut-off material which is prepared by wrapping the permeable water cut-off agent of any one of (1) to (4) with a water-pervious material;
(14) A concrete or mortar composition containing the permeable water cut-off agent of (5) or (6);
(15) A hardened product which is prepared by hardening the concrete or mortar composition of (14);
(16) A method for producing a permeable water cut-off agent, which is characterized by mixing a gelatinated composition (composition a) which is prepared by mixing a gelable hydrophilic resin, a surfactant, a gellant for the hydrophilic resin and water, and a mixture (composition b) of a water-insoluble powdery substance and water; and
(17) A permeable water cut-off agent, which comprises one or more gelable hydrophilic resins selected from the group consisting of sodium poly(meth)acrylate, sodium alginate and sodium carboxymethyl cellulose, one or more surfactants, one or more gellants for the hydrophilic resin(s) as selected from the group consisting of Ca-type bentonite, Ca-type montmorillonite and Ca-type smectite, and water, and of which the thixotropic index is not smaller than 1.5.

### BRIEF DESCRIPTION OF THE DRAWINGS

Fig. 1 shows one example of concrete containers.
Fig. 2 shows one of the bisected divisions of the concrete container of Fig. 1.
Fig. 3 shows a leak test container in which the two bisected pieces of the concrete container of Fig. 1 are joined and fixed with wire.
Fig. 4 is a cross-section in the case that an opening for a permeable water cut-off agent is formed on a waterproof joint. The numbers given in those drawings shows as follow:
   1: Concrete container
   2: Seam
   3: Wire
   4: Opening for permeable water cut-off agent
   5: Heat-insulating material holding concrete
   6: Heat-insulating material
   7: Concrete
   8: Waterproof asphalt joint

### BEST MODES OF CARRYING OUT THE INVENTION

The present invention will be described in detail hereinunder.

The permeable water cut-off agent of the present invention contains a gelable hydrophilic resin and a substance which is effective as gellant for the hydrophilic resin.

A part of the gelable hydrophilic resin for use in the present invention reacts with the gellant for the hydrophilic resin to give a water-insoluble gel, while the remainder of it acts as a binder for the gel, and, after the agent permeates into a leakage site, it is thereby prevented from flowing away. The gelable hydrophilic resin of that type includes gelable highly water-absorbing polymers capable of absorbing water and swelling within a short period of time to finally have a swollen weight of at most hundreds times of its original weight, polyvinyl acetates, polyvinyl alcohols and the like. Preferred is non-crosslinked one. The mean molecular weight of the resin is not specifically defined as far as the resin is gelable , and it varies depending on the polymer type and others. Therefore, though not indiscriminately said so, generally preferred are higher molecular resins. In general, the resin may have a mean molecular weight of from thousands to tens of millions or so.

Specific examples of the gelable highly water-absorbing polymers that are usable herein include poly(meth)acrylic acid derivatives such as alkali metal poly(meth)acrylates, sodium (meth)acrylate-vinyl alcohol copolymers (saponified methyl (meth)acrylate-vinyl acetate copolymers), saponified poly(meth)acrylonitrile system polymers, poly(meth)acrylamides, etc.; alginic acid and its derivatives, for example, alginic acid and its alkali metal salts such as sodium alginate, potassium alginate, etc., and polyalcohol esters of alginic acid such as propylene glycol alginic acid ester, etc.; starch derivatives, for example, alkali metal salts of starch glycolic acid ester or phosphoric acid ester, such as sodium starch glycolate, potassium starch glycolate, sodium starch phosphates, potassium starch phosphates, etc.; cellulose derivatives such as sodium carboxymethyl cellulose, potassium carboxymethyl cellulose, etc. Preferred are poly(meth)acrylic acid derivatives such as sodium poly(meth)acrylate, poly(meth)acrylic acid amides, etc.; alginic acid and its alkali metal salts such as alginic acid, sodium alginate, potassium alginate, etc.; lower (C₁₋₅) glycol esters of alginic acid, such as propylene glycol alginic acid ester, etc.; as well as sodium starch glycolate, sodium starch phosphates, and sodium carboxymethyl cellulose. More preferred are poly(meth)acrylic acid derivatives, sodium alginate and sodium carboxymethyl cellulose; and even more preferred are sodium polyacrylates. The preferred sodium polyacrylates may have a mean molecular weight of not smaller than 5,000, preferably not smaller than 50,000, more preferably not smaller than 500,000. The uppermost limit of the molecular weight is not specifically defined. The highest molecular weight sodium polyacrylates that are commercially available at present have a mean molecular weight of millions or so.

One or more of those gelable highly water-absorbing polymers may be used herein either singly or as combined. Combination of the gelable highly water-absorbing polymer and a polyvinyl acetate or polyvinyl alcohol improves the leak-preventing capabilities of the agent in some cases. In the combination of the gelable highly water-absorbing polymer and a polyvinyl acetate or polyvinyl alcohol, the gelable highly water-absorbing polymer is mixed in amount of from 5 to 95 % by weight of the total weight of the combination.

The gelable hydrophilic resin may be mixed with a non-gelable hydrophilic paste that acts as an auxiliary agent. The hydrophilic paste may be any of natural pastes, synthetic polymer pastes and others, but preferred are hardly perishable synthetic polymer pastes. Specific examples of the hydrophilic pastes usable herein include gelatin, glue, acrylic emulsions, methyl cellulose, hydroxypropyl cellulose, polyhydroxyethyl methacrylate, starch, etc. The amount of the non-gelable hydrophilic paste, if used, to be mixed with the gelable hydrophilic resin may be preferably from 5 to 500 parts by weight relative to 100 parts by weight of the resin, though not specifically defined. The hydrophilic paste acts to prevent the leak-preventing components having penetrated into leakage sites from flowing away.

The gellant for the hydrophilic resin, which is in the permeable water cut-off agent of the present invention, is not specifically defined, provided that it chemically or physically bonds to the gelable hydrophilic resin in water to thereby gelatinize the hydrophilic resin. For this, generally preferred are compounds capable of giving divalent or higher polyvalent metal cations in water. The employability of compounds as the gellant in the present invention could easily be known as follows. A gelable hydrophilic resin is dissolved in water, to which a compound to be checked is added, and the viscosity of the resulting solution is measured. Increase in the viscosity indicates the employability of the compound tested as the gellant herein. In this test, the concentration of the gelable hydrophilic resin to be in the solution could not be indiscriminately determined, as varying depending on the type and the molecular weight of the resin. In general, however, one conuenient method is to dissolve the resin in water to give a concentration of lower than the degree of the solubility of the resin in water and to give a viscosity of from thousands to tens of thousands cps or so. In the test, the compound to be tested for its employability as the gellant is well contacted with water to form its aqueous solution or dispersion including metal ions of the compound released therein, and the resulting solution or dispersion is added to the solution of the gelable hydrophilic resin in an amount of 1 % by weight or so of the resin.

Specific examples of the gellant include polyvalent metal silicates, water-soluble alkaline earth metal salts, alums, water-soluble aluminium salts, water-soluble iron salts, water-soluble manganese salts, water-soluble zinc salts, alkaline earth metal oxides and the like capable of giving metal ions in water to such an extent that it exhibits geratinability. The polyvalent metal silicates include, aluminium silicates, calcium silicates, etc. As those, preferred are Ca-type silicates such as bentonite, montmorillonite, smectite, etc. The Ca-type silicates such as bentonite, montmorillonite, smectite and others as referred to herein means those having a relatively large calcium content. Preferably, the calcium content, calculated as CaO, of the silicate of that type falls between 1 and 2 % or so, or even larger than the range by weight in the total weight of bentonite, montmorillonite, smectite or the like. The water-soluble alkaline earth metal salts include alkaline earth metal salts of organic acids having from 1 to 3 carbon atoms, or inorganic acids, etc. As their specific examples, mentioned are calcium acetate, calcium chloride, calcium hydroxide, calcium nitrate, magnesium acetate, magnesium chloride, magnesium nitrate, magnesium sulfate, etc. The alums include aluminium potassium alum, iron alum, etc. The water-soluble aluminium salts include aluminium acetate, aluminium chloride, aluminium sulfate, aluminium nitrate, etc. The water-soluble iron salts include iron salts of organic acids having from 1 to 3 carbon atoms, iron salts of inorganic acids and others, concretely such as iron acetate, iron chloride, iron sulfate, iron nitrate, etc. The water-soluble manganese salts include manganese salts of organic acids having from 1 to 3 carbon atoms, manganese salts of inorganic acids and others, concretely such as manganese acetate, manganese chloride, manganese sulfate, etc. The water-soluble zinc salts include zinc salts of organic acids having from 1 to 3 carbon atoms, zinc salts of inorganic acids and others, concretely such as zinc acetate, zinc chloride, zinc nitrate, zinc sulfate, etc. The alkaline earth metal oxides include magnesium oxide, calcium oxide, etc. More preferred are Ca-type bentonite, Ca-type montmorillonite, Ca-type smectite, magnesium acetate, calcium hydroxide, calcium acetate, aluminium acetate, and aluminium sulfate. In practical use, especially preferred are Ca-type bentonite, Ca-type montmorillonite, Ca-type smectite and the like, as having a property of swelling.

The gellant for the gelable hydrophilic resin gelatinizes the resin into a water-insoluble gel, which, however, does not precipitate. Therefore, the resulting gel can be smoothly led into leakage sites to seal them. In addition, as being insoluble in water, the gel thus having sealed the leakage sites does not again dissolve in water to flow away.

The amount of the gellant for the hydrophilic resin varies, depending on its gelatination capability, the type of the gelable hydrophilic resin, etc. In general, however, it may fall between 1 and 2000 parts by weight, but preferably between 10 and 1500 parts by weight, relative to 100 parts by weight of the gelable hydrophilic resin. As the gellant, salts such as calcium, magnesium or aluminium salts of organic or inorganic acids have high purity and therefore have a high degree of geratination. Naturally, therefore, the amount of the salt of that type to be added to the gelable hydrophilic resin as the gellant for the resin may be small, and, for example, it preferably falls between 10 and 200 parts by weight, more preferably between 20 and 100 parts by weight or so, relative to 100 parts by weight of the gelable hydrophilic resin. On the other hand, the Ca-type bentonite, Ca-type montmorillonite, Ca-type smectite or the like gives a smaller amount of gelable ions (calcium ion, magnesium ion, aluminium ion, etc.) in water than the salts of organic or inorganic acids mentioned above, and therefore, its amount to be mixed with the gelable hydrophilic resin is preferably larger, for example, falling between 10 and 1500 parts by weight, more preferably between 20 and 1000 parts by weight, relative to 100 parts by weight of the gelable hydrophilic resin.

In one preferred embodiment of the present invention, the permeable water cut-off agent contains a surfactant as an additine. The surfactant promotes the penetration of the leak-preventing component such as the gel of the hydrophilic resin and others (hereinafter referred to as the "leak-preventing component") into leakage sites. The surfactant may be of any type, including anionic, cationic, nonionic and amphoteric ones. Concretely mentioned are salts of fatty acids, phosphoric acid esters, polyoxyethylene glycols, tetraalkylammonium salts, salts of alkyl ether sulfonic acid esters, salts of α-olefin-sulfonic acids, fatty acid alkanolamides, etc. One or more of these may be used either singly or as combined. From the environmental viewpoint, those with good biodegradability are preferably selected. Specific examples of those surfactants include sodium salts of fatty acids, potassium salts of fatty acids, sodium salts of alkyl ether sulfonic acid esters, sodium α-olefin-sulfonates, fatty acid alkanolamides, alkylamine oxides, etc.

In the case that the permeable water cut-off agent of the present invention contains water, the content of the surfactant to the total weight of the water cut-off agent may fall generally between 0.1 and 20 % by weight or so, preferably between 0.5 and 10 % by weight or so, more preferably between 1 and 7 % by weight or so .

The permeable water cut-off agent of the present invention may optionally contain, as an auxiliary agent, a water-insoluble powdery substance that gives substantially no gelable ion in water. The water-insoluble powdery substance may be any of organic powdery substances and inorganic powdery substances, and preferably has a broad and uniform grain size distribution falling between 0.1 µm and 1 mm, more preferably between 0.1 and 50 µm. The specific gravity of the grains constituting the substance is preferably near to that of water of being 1.0 or may be larger . It is desirable that the grains may float and homogeneously disperse in water. Specific examples of the water-insoluble powdery substance employable herein include rosin powder, resin grains, clays such as sepiolite, Na-type bentonite, Na-type montmorillonite and the like, as well as wood powder, vermiculite, pearlite, mica powder, magnesium silicate, etc. Preferred are inorganic powders. Also preferred are those capable of absorbing water to swell. One or more such water-insoluble powdery substances may be used either singly or as a mixture of two or more. When two or more are mixed, they are preferably so selected that the resulting mixture can have a broad grain size distribution. The color of the water-insoluble powdery substance has an influence on the outward appearance of constructions when the water cut-off agent comprising the substance is applied to constructions. Therefore, for application to roofs and walls, it is desirable to select water-insoluble powdery substances of which the color is the same as that of roofs or walls or which is colorless and transparent.

The water-insoluble powdery substance is optionally used in the present invention, and its amount to be used is not specifically defined. When used, it is generally desirable that the substance is used in the amount of from 2 to 90 % by weight of the permeable water cut-off agent of the present invention.

The preferred composition of the water-containing, permeable water cut-off agent of the present invention is as follows, in which the proportion of each component is in terms of % by weight relative to the total weight of the permeable water cut-off agent.
Gelable hydrophilic resin:
   From 0.1 %, preferably from 0.2 % to 20 %, preferably up to 10 % or so.
Gellant:
   From 0.1 %, preferably from 1 % to 20 %, preferably up to 10 % or so.
Other auxiliary agents:
   From 0.1 %, preferably from 0.2 % to 40 %, preferably up to 25 % or so.
Water: Balance.

When the other auxiliary agents include a surfactant in the composition mentioned above, the ratio of the surfactant to all auxiliary agents may fall between 0.1 and 10 % or so, and the balance is for the other auxiliary agents than the surfactant (for example, non-gelable hydrophilic paste, water-insoluble powdery substance such as that mentioned above, anti-freezing agent, etc.).

When the gelable hydrophilic resin is a sodium polyacrylate (PANA), the preferred composition of the water cut-off agent is as follows:
PANA:
   From 0.1 %, preferably from 0.2 % to 2 % or so, preferably up to 1 % or so.
Gellant:
   From 0.7 %, preferably from 1 % to 20 % or so, preferably up to 10 % or so.
Surfactant:
   From 0.1 %, preferably from 0.5 % to 10 % or so, preferably up to 5 % or so.
Other auxiliary agents:
   From 0 to 40 % or so, preferably to 25 % or so.
Water: Balance.

The permeable water cut-off agent of the present invention not containing water (or containing only a minor amount of water) may be prepared by mixing the constituent components mentioned above except water, and the mixture may be directly spread on leakage sites, or may be used in mixture with any other ordinary water cut-off material or repairing material. If desired, the permeable water cut-off agent of that type may be wrapped with a water-pervious material to give the water cut-off material of the present invention.

The preferred composition of the water-free, permeable water cut-off agent of the present invention is as follows:
Gelable hydrophilic resin:
   From 5 %, preferably from 10 % to 50 % or so, preferably up to 40 % or so.
Gellant:
   From 5 %, preferably from 13 % to 90 % or so, preferably up to 80 % or so.
Other auxiliary agents: Balance.

Where the other auxiliary agents include a surfactant in the composition mentioned above, the ratio of the surfactant to all auxiliary agents may be from 5 %, preferably from 10 % to 40 % or so, preferably up to 30 % or so, and the balance is for the other auxiliary agents except the surfactant.

The water-pervious material for use in the present invention is a fibrous or porous material, which may be any one capable of wrapping the permeable water cut-off agent with it. It is not always necessary to completely seal the opening of the water water-pervious material of the present invention. If desired, the water-pervious material, including the permeable water cut-off agent therein may be rolled into rolls, or formed into bags, ropes or the like.

A material used for the water-pervious material is not specifically defined, but those having poor mechanical strength should not be used herein. Concretely, it includes cotton fabrics, synthetic fiber fabrics, knitted cotton ropes, knitted synthetic fiber ropes, urethane sponges, synthetic rubber sponges, cellulose sponges, and unwoven fabrics. Preferred are flexible fabrics such as knitted fabrics.

The water permeability(amount per time unit) of the water-pervious material is not specifically defined, but those having too poor water permeability should not be used herein.

The water-pervious material may have any desired size. In application to the joint surface of concrete, it is desirable that the length of the material is the same as that of the joint surface and the width thereof is the same as or smaller than that of the joint surface.

For wrapping powder, the water-pervious material is preferably selected so that no dry powder may leak out of it . If desired, the permeable water cut-off agent may be previously kneaded with a small amount of water and shaped into rods or pellets, and thereafter they may be wrapped with the water-pervious material.

In practical use, for example, the water cut-off material of the present invention thus produced in the manner mentioned above is disposed at a site at which adjacent construction parts must be bonded to each other, and the parts are then bonded to each other via the water cut-off material as sandwiched therebetween. In this case, even if the bonding surface of the parts is wetted or moistened, such causes no problem at all. It is desirable that the parts to be bonded together are moved nearer to have a smaller distance therebetween than the thickness of the water cut-off material as put between them, thereby compressing the water cut-off material between the parts. In that manner, the water cut-off material of the present invention is compressed to form a tight and void-free waterproof joint between the parts, matching to corresponding to the roughness of the bonding surface of the parts. The thickness of the water cut-off material of the present invention for this application is not specifically defined, but may fall generally between 1 and 3 cm.

Roofs to which the water cut-off material of the present invention is favorably applied are flat roofs of reinforced concrete, for which, in general, waterproof concrete jointing is combined with membrane water cut-off, such as asphalt water cut-off, sheet water cut-off, waterproof coating, etc. The water cut-off material of the present invention may be used for waterproof joints. For roof terraces, the surface of the joints comprising the water cut-off material of the present invention may be further covered with asphalt, mortar or any other elastic sealing material for preventing the joints from being worn due to stepping thereon. Floors to which the water cut-off material of the present invention is favorably applied are fair-faced concrete floors, for which the water cut-off material of the present invention can be used in concrete joints to make the joints waterproof. If desired, the waterproof joints may be covered with mortar.

Walls to which the water cut-off material of the present invention is favorably applied are concrete walls, in which the water cut-off material is disposed in the joints of concrete parts. Also in this case, the surface of the joints may be further covered with asphalt, mortar or any other elastic sealing material with no problem.

Next, the permeable water cut-off agent of the present invention which contains water is described below.

As has been mentioned hereinabove, the permeable water cut-off agent of the present invention comprises the gelable hydrophilic resin and the gellant for the hydrophilic resin, optionally containing the surfactant and/or the water-insoluble powdery substance, and may be wrapped with a water-pervious material before use. If desired, water may be added to the permeable water cut-off agent of the present invention comprising the components mentioned above to give a liquid, a slurry or a clay-like preparation before use. In this case, the amount of water to be added varies, depending on the desired embodiments of using the agent, but may generally fall between 10 and 98 % by weight of the permeable water cut-off agent.

The water-containing, permeable water cut-off agent of the present invention is preferably thixotropic, and its thixotropic index is preferably 1.5 or larger, more preferably from 1.5 to 10.

The water-containing, permeable water cut-off agent of the present invention may contain a polyalcohol, which is for preventing the agent from freezing in its use (in its spreading) in an open air whose temperature may be below-freezing point.

The polyalcohol is not specifically defined, provided that it has the function of preventing the permeable water cut-off agent from freezing, and low-molecular compounds are preferred. As specific examples of the polyalcohol employable herein, mentioned is at least one selected from monoalkylene glycols, glycerin, ethylene glycol derivatives, and pentaerythritol. These may be used in combination. Of those polyalcohols, the monoalkylene glycols include ethylene glycol, propylene glycol, butylene glycol, pentanediol, etc.; and the ethylene glycol derivatives include ethylene glycol, diethylene glycol, triethylene glycol, tetraethylene glycol, polyethylene glycol, etc.

The amount of the polyalcohol to be added may be generally 5 parts by weight or more, preferably from 5 to 80 parts by weight, relative to 100 parts by weight of water.

The water-containing, permeable water cut-off agent of the present invention may be prepared by homogeneously mixing the constituent components in a predetermined ratio. In this case, the constituent components may be mixed in any desired order, but, for the water-containing, permeable water cut-off agent of the present invention which contains the surfactant and the water-insoluble powdery substance, it is desirable to mix the gelatinous composition (composition a) as prepared by mixing the surfactant, the gelable hydrophilic resin, the gellant for the hydrophilic resin and water, and a mixture (composition b) of a water-insoluble powdery substance and water. Mixing them gives a state in which the water-insoluble powdery substance is phase-separated from the gelled hydrophilic resin, thereby often improving the sealing capabilities of the water cut-off agent for cracks or fissures. The mixing ratio of the constituent components may be as follows: In the composition a, the surfactant may be generally from 0.01 to 10 parts by weight, preferably from 0.1 to 3 parts by weight, the gelable hydrophilic agent may be generally from 0.01 to 10 parts by weight, preferably from 0.1 to 3 parts by weight, and the gellant for the hydrophilic resin may be generally from 0.1 to 20 parts by weight, all relative to 100 parts by weight of water; and in the composition b, the water-insoluble powdery substance may be generally from 1 to 20 parts by weight relative to 100 parts by weight of water. Where the composition a and the composition b, separately prepared, are mixed, before use, they may be mixed in such a manner that the composition b is generally from 5 to 50 parts by weight, preferably from 10 to 30 parts by weight, relative to 100 parts by weight of the composition a.

In one embodiment of using the permeable water cut-off agent of the present invention thus produced in the manner mentioned above, the agent may be spread on possibly leakage openings, if found, and therearound. If leakage sites can not be identified, the agent may be uniformly spread over the entire surface of leaky roofs, floors or walls. For this, complete re-painting of those roofs, floors or walls is not necessary at all.

Roofs to which the permeable water cut-off agent of the present invention is favorably applied are flat roofs of reinforced concrete, for which, in general, waterproof concrete jointing is combined with membrane leakage, such as asphalt water cut-off, sheet water cut-off, water cut-off coating, etc. For those, the water cut-off agent may be spread over the waterproof layer.

Floors to which the permeable water cut-off agent of the present invention is favorably applied are fair-faced concrete floors. It is not problem that the floors are coated with mortar, paint, sheet material or the like, and the water cut-off agent may be spread over such coating.

Outer walls to which the permeable water cut-off agent of the present invention is favorably applied are cement mortar walls, ALC walls, ceramic siding walls, acrylic resin-sprayed walls, tiled walls, brick walls, fair-faced concrete walls, etc.

For the water-containing, permeable water cut-off agent of the present invention that contains the surfactant, either one of a composition A containing a gelable hydrophilic resin, the surfactant and water and a composition B containing the surfactant, the gellant for the hydrophilic resin and water may be spread on a part to be spread therewith, and thereafter the other may be spread on nearly the same part as previously spread. Some types of the gellant for the hydrophilic resin to be in the permeable water cut-off agent of the present invention easily precipitate and hardly re-disperse. For the gellant of those types, this method may be employable.

In this method, the amount of the gelable hydrophilic resin in the composition A may be generally from 0.01 to 5 parts by weight, preferably from 0.1 to 3 parts by weight, relative to 100 parts by weight of water therein.

The amount of the surfactant in the composition A may be generally from 0.01 to 10 parts by weight, preferably from 0.1 to 5 parts, relative to 100 parts by weight of water therein; and that in the composition B may be generally from 0.01 to 10 parts by weight, preferably from 0.1 to 5 parts by weight, relative to 100 parts by weight of water therein.

The amount of the gellant for the hydrophilic resin in the composition B may be generally from 0.1 to 30 parts by weight, preferably from 1 to 10 parts by weight, relative to 100 parts by weight of water therein.

If desired, the composition B may additionally contain a water-insoluble powdery substance in an amount of from 1 to 50 parts by weight or so, relative to 100 parts by weight of water therein.

The composition A and the composition B may be mixed in any desired ratio. In general, however, the ratio by weight of the composition A to the composition B falls between 3:1 and 1:20, preferably between 2:1 and 1:15, in terms of the solid content of each composition.

The water-containing, permeable water cut-off agent of the present invention may be injected into a construction through openings formed in the construction, thereby effectively preventing water leaks in the construction.

The openings are formed in the surface of a construction body to ensure direct penetration of the permeable water cut-off agent into the construction body. These give pathways running from the surface of the construction body to the inside thereof, through which the permeable water cut-off agent penetrate inside the construction body. The shape and the size of those openings and pathways may be any desired ones. For example, the joints in the surface of a construction body may be holed to have openings and pathways therethrough. Alternatively, tubular holes such as pipes may be disposed into a construction body. While not used, the openings may be closed with covers with no problem.

For example, in the case of a construction roof which is made of roof slabs of concrete as jointed with waterproof asphalt and which is covered with a heat-insulating material and with a concrete layer for holding the heat-insulating material in that order, it is desirable to form openings in the roof through which the permeable water cut-off agent could directly reach the waterproof joints. In that case, in general, the concrete layer for holding the heat-insulating material is partitioned independently of the waterproof asphalt joints. In the leak-preventing method of the present invention, however, it is desirable that the heat-insulating material and the concrete layer for holding the heat-insulating material are partitioned in accordance with the waterproof asphalt joints. The partitioning members usable herein may comprise a core of foamed polystyrene or the like. Some partitioning members may be notched to form openings for injecting therethrough. Alternatively, pipes may be provided, each running from the surface of the concrete layer for holding the heat-insulating material to the concrete slab or to the waterproof joint.

Also in the case of an outer wall of a construction which is generally composed of concrete slabs as jointed with waterproof asphalt and which is covered with decorative plates or tiled, it is desirable to form openings through the wall through which the permeable water cut-off agent can directly reach the waterproof joints. To form the openings, the joints for the decorative plates or the tiles may be notched.

In that case, the permeable water cut-off agent can penetrate into the cracks formed in the gap between the waterproof joint and the concrete slab to prevent water leaks into the cracks.

In underground constructions, water leaks are generally caused by ground water. In those, it is desirable to form openings of pipes or the like through which the permeable water cut-off agent can reach the outer joints of the underground constructions. It is quite unnecessary to expose the openings out of the surface of the ground. The openings may be so formed inside the underground construction that they can run through the wall of the construction, and they are usually closed with covers.

The water-containing, permeable water cut-off agent of the present invention may be impregnated into a spongy substance to prepare the water cut-off material of the present invention. In this case, the permeable water cut-off agent of the present invention to be used preferably contains a surfactant. Also in this case, the spongy substance into which the permeable water cut-off agent has been previously impregnated may be dried before use, or alternatively, the permeable water cut-off agent may be impregnated into the spongy substance previously applied to leakage sites. The spongy substance to be used herein may be of any and every type, but preferred are urethane foam such as urethane sponge, etc.; silicon foam such as silicon sponge, etc.; synthetic rubber foam such as synthetic rubber sponge, etc.; cellulose foam such as cellulose sponge, etc.

To impregnate the permeable water cut-off agent into the spongy substance of that type, in general, the spongy substance of being in a compressed condition is dipped in the permeable water cut-off agent, and while being thus dipped therein, the compressed spongy substance is restored to its original non-compressed condition, whereby the permeable water cut-off agent smoothly penetrates into the spongy substance. Alternatively, the permeable water cut-off agent may be applied to the spongy substance, using a coating machine, a brushing machine or the like, whereby the former may impregnate into the latter.

In practical use, for example, the water cut-off material of the present invention may be disposed at a site at which adjacent construction parts must be bonded to each other, and the parts are then bonded to each other via the water cut-off material as sandwiched therebetween. It is desirable that the parts to be bonded together are moved nearer to have a smaller distance therebetween than the thickness of the water cut-off material as put between them, thereby compressing the water cut-off material between the parts. In this case, even if the bonding surface of the parts is wetted or moistened, such causes no problem at all. In that manner, the water cut-off material of the present invention is compressed to form a tight and void-free waterproof joint between the parts, matching to the roughness of the bonding surface of the parts. The same manner as in practical use of the water cut-off material of the present invention mentioned above, for which is used a water-pervious material, may apply to this case. The thickness of the water cut-off material of the present invention for this application is not specifically defined, but may fall generally between 1 and 3 cm.

For this case, if desired, the spongy substance may be used to form the joints and the permeable water cut-off agent may be impregnated into the thus-formed spongy joints, in place of using the previously prepared water cut-off material of the present invention for the joints.

The water-containing, permeable water cut-off agent of the present invention may be impregnated into a cloth, a rope, a film or a sheet, through coating or dipping, to prepare the water cut-off material of the present invention. In this case, the permeable water cut-off agent of the present invention to be used preferably contains a surfactant. The coating method and the dipping method for this are not specifically defined. For example, machine coating of the substrate material with the permeable water cut-off agent may be followed by drying the coated material to prepare the water cut-off material; or the permeable water cut-off agent may be applied to a cloth, a rope, a film or a sheet disposed in concrete structures.

The cloth, rope, film or sheet to which the permeable water cut-off agent is applied through coating or dipping may be of any and every type, but preferred are those capable of being rapidly wetted with the permeable water cut-off agent. The film and the sheet are preferably resistant to water. Specific examples of the film and the sheet employable herein are those of polyester, polypropylene, polyethylene, polyvinyl chloride, polyurethane, rubber or the like. Also preferably, the cloth and the rope can be easily wetted with the permeable water cut-off agent, as facilitating the infiltration of the agent thereinto. As specific examples of the cloth and the rope, mentioned are cotton fabrics, non-woven polyester fabrics, non-woven rayon fabrics, hemp ropes, cotton ropes, polyester ropes, etc.

In practical use, the water cut-off material of the present invention as prepared by applying the permeable water cut-off agent of the present invention to the cloth, rope, film or sheet through coating or dipping is preferably disposed adjacent to waterproof concrete joints. If desired, it may be applied to cracks of fair-faced concrete structures or to concrete-to-concrete joints.

The water-containing, permeable water cut-off agent of the present invention may be mixed and kneaded with concrete or mortar to prepare the concrete or mortar composition of the present invention. In this case, the permeable water cut-off agent of the present invention to be used preferably contains a surfactant.

The concrete or mortar composition of the present invention comprises normal Portland cement or mixed cement, fine aggregate and/or coarse aggregate, various admixtures and others, and contains the permeable water cut-off agent of the present invention generally in an amount of from 1 to 30 % by weight in the basis of the total weight of the concrete or mortar composition of the present invention.

Where the concrete or mortar composition of the present invention is used for repairing leaky constructions, the leakage sites may be sealed with the composition. However, when the leakage sites can not be identified therein, leaky roofs, floors or walls may be entirely and uniformly coated with the concrete or mortar composition of the present invention or may be entirely and uniformly finished with plaster joints of the composition. For this, complete re-painting of those roofs, floors or walls is not necessary at all.

The concrete or mortar composition of the present invention may be used for forming the bodies of roofs, floors or walls. In that case, the hardened bodies of roofs, floors or walls made of the composition are free from water leaks even when they are cracked or fissured after their construction.

### EXAMPLES

The present invention is described in more detail with reference to the following Examples, in which the thixotropic index was measured according to the reference test as stipulated in JIS K5400 4.5.3.

### Example A1:

10 g of sodium stearate, 7 g of sodium polyacrylate (Panakayaku F (trade name) from Nippon Kayaku Co.), 30 g of montmorillonite (Kunipure F(trade name) from Kunimine Industry Co.) and 1000 g of water were well mixed to prepare a viscous liquid (this is a permeable water cut-off agent of the present invention, having a thixotropic index (hereinafter referred to as TI) of 1.7). 1000 g of this liquid was uniformly spread over the leaky area (about 25 m²) of the roof of a 5-storied, reinforced concrete building, and then 50 liters of water was spread thereover through a hose. After 7 days, it rained, but the roof did not leak water at all.

Apart from this, 3.0 kg of commercially-available, sand-mixed cement (Asoh Katei Cement (trade name) from Asoh Cement Co.) was prepared. This was well mixed with 800 g of water, cast into a mold pattern, and solidified therein to form a molded body as in Fig. 1.

This concrete container was bisected (as in Fig. 2), and the two pieces were then again combined together and reinforced with wire as in Fig. 3. This was filled with water, but immediately leaked water through the joint. 20 g of the permeable water cut-off agent prepared above was applied to the inner surface of the container around the joint, using a brush. After one hour, the container was filled up with water, and it did not leak water. After having been left for 30 minutes, water was poured out of the container, and the container was dried at 60°C for 3 days. After having been cooled to room temperature, the container was again filled up with water. In that condition, the container did not leak water at all through the joint. Then, the container thus filled with water was left for 3 days, and it did not still leak water at all through the joint.

### Example A2:

5 g of sodium stearate, 5 g of Emal 10 Powder (trade name, from Kao Corp., having an essential component of sodium laurylsulfate), 20 g of sodium alginate (chemical reagent from Wako Junyaku Industries Ltd.), 50 g of smectite (Smecton (trade name) from Kunimine Industry Co.) and 1000 g of water were well mixed to prepare a viscous liquid (this is a permeable water cut-off agent of the present invention, having TI of 2.3). 500 g of this liquid was uniformly spread over the leaky area (about 10 m²) of the roof terrace of the second floor of a 5-storied, reinforced concrete building, and then 30 liters of water was spread thereover through a hose. After 6 days, it rained, but the roof terrace did not leak water at all.

20 g of the permeable water cut-off agent prepared above was applied to the inner surface of the same container as in Example A1, around the joint, using a brush. After one hour, the container was filled up with water, and it did not leak water. After having been left for 30 minutes, water was poured out of the container, and the container was dried at 60°C for 3 days. After having been cooled to room temperature, the container was again filled up with water. In that condition, the container did not leak water at all through the joint. Then, the container thus filled with water was left for 3 days, and it did not still leak water at all through the joint.

### Example A3:

20 g of Emal 10 Powder (trade name, from Kao Corp., having an essential component of sodium laurylsulfate), 10 g of sodium carboxymethyl cellulose (chemical reagent from Wako Junyaku Industries Ltd.), 5 g of calcium acetate and 1000 g of water were well mixed to prepare a viscous liquid (this is a permeable water cut-off agent of the present invention, having TI of 4.0). 1000 g of this liquid was uniformly applied to the leaky area (about 10 m²) of the tiled outer wall of the third floor of a 3-storied, reinforced concrete building, and then 10 liters of water was spread thereover through a hose. After 10 days, it rained, but the wall did not leak water at all.

20 g of the permeable water cut-off agent prepared above was applied to the inner surface of the same container as in Example A1, around the joint, using a brush. After one hour, the container was filled up with water, and it did not leak water.. After having been left for 30 minutes, water was poured out of the container, and the container was dried at 60°C for 3 days. After having been cooled to room temperature, the container was again filled up with water. In that condition, the container did not leak water at all through the joint. Then, the container thus filled with water was left for 3 days, and it did not still leak water at all through the joint.

### Example A4:

20 g of sodium oleate, 10 g of sodium carboxymethyl cellulose (chemical reagent from Wako Junyaku Industries Ltd.), 50 g of bentonite (Kunigel (trade name) from Kunimine Industry Co.) and 1000 g of water were well mixed to prepare a viscous liquid (this is a permeable water cut-off agent of the present invention). 1000 g of this liquid was uniformly sprinkled over the leaky area (about 10 m²) of the 2nd-floor roof parking lot of a 2-storied parking garage, and then 20 liters of water was spread thereover through a hose. After 2 days, it rained, but the roof parking lot did not leak water at all.

20 g of the permeable water cut-off agent prepared above was applied to the inner surface of the same container as in Example A1, around the joint, using a brush. After one hour, the container was filled up with water, and it did not leak water.. After having been left for 30 minutes, water was poured out of the container, and the container was dried at 60°C for 3 days. After having been cooled to room temperature, the container was again filled up with water. In that condition, the container did not leak water at all through the joint. Then, the container thus filled with water was left for 3 days, and it did not still leak water at all through the joint.

### Example A5:

10 g of sodium stearate, 7 g of sodium polyacrylate (Panakayaku F (trade name) from Nippon Kayaku Co.), 20 g of smectite (Synthetic Smectite (trade name) from Co-op Chemical Co.) and 1000 g of water were well mixed to prepare a viscous liquid (this is a permeable water cut-off agent of the present invention).

20 g of the viscous liquid prepared above was applied to the inner surface of the same container as in Example A1, around the joint, using a brush. After one hour, the container was filled up with water, and it did not leak water.. After having been left for 30 minutes, water was poured out of the container, and the container was dried at 60°C for 3 days. After having been cooled to room temperature, the container was again filled up with water. In that condition, the container did not leak water at all through the joint. Then, the container thus filled with water was left for 3 days, and it did not still leak water at all through the joint.

### Example B1:

10 g of sodium stearate, 4 g of sodium polyacrylate (Panakayaku F (trade name) from Nippon Kayaku Co.), 60 g of bentonite (Superben (trade name) from Hojun Mining Co.), 200 g of glycerin and 1000 g of water were well mixed to prepare a viscous liquid (this is a permeable water cut-off agent of the present invention, having TI of 1.9).

20 g of the permeable water cut-off agent prepared above was applied to the inner surface of the same container as in Example A1, around the joint, using a brush. Then, 100 g of water was poured into the container, left for 5 minutes, and thereafter poured out of it. After one hour, the container was filled up with water, and it did not leak water.. After having been left for 30 minutes, water was poured out of the container, and the container was dried at 60°C for 3 days. After having been cooled to room temperature, the container was again filled up with water. In that condition, the container did not leak water at all through the joint. Then, the container thus filled with water was left for 3 days, and it did not still leak water at all through the joint.

On the other hand, 100 g of the permeable water cut-off agent prepared above was put into a polyethylene container, which was then sealed and kept in a freezer at -12°C. After 24 hours, the container was taken out of the freezer. As containing glycerin, the agent in the container did not freeze but was still liquid.

### Example B2:

5 g of sodium stearate, 5 g of Emal 10 Powder (trade name, from Kao Corp., having an essential component of sodium laurylsultate), 20 g of sodium alginate (chemical reagent from Wako Junyaku Industry Ltd.), 50 g of smectite (Smecton (trade name) from Kunimine Industry Co.), 200 g of ethylene glycol and 1000 g of water were well mixed to prepare a viscous liquid (this is a permeable water cut-off agent of the present invention).

20 g of the permeable water cut-off agent prepared above was applied to the inner surface of the same container as in Example A1, around the joint, using a brush. Then, 100 g of water was poured into the container, left for 5 minutes, and thereafter poured out of it. After one hour, the container was filled up with water, and it did not leak water. After having been left for 30 minutes, water was poured out of the container, and the container was dried at 60°C for 3 days. After having been cooled to room temperature, the container was again filled up with water. In that condition, the container did not leak water at all through the joint. Then, the container thus filled with water was left for 3 days, and it did not still leak water at all through the joint.

On the other hand, 100 g of the permeable water cut-off agent prepared above was put into a polyethylene container, which was then sealed and kept in a freezer at -12°C. After 24 hours, the container was taken out of the freezer. In the container, the permeable water cut-off agent of the present invention did not freeze but was still liquid.

### Example C1:

50 g of sodium stearate, 100 g, in terms of its solid content, of polyvinyl acetate resin (emulsion of Saibinol D-302 (trade name) from Saiden Chemical Co.), 70 g of smectite (Synthetic Smectite SWF (trade name) from Co-op Chemical Co.) and 1000 g of water were well mixed to prepare a viscous liquid (this is a permeable water cut-off agent of the present invention, having TI of 4.8).

1000 g of this liquid was uniformly sprinkled over the leaky area (about 20 m²) of the roof of a 4-storied, reinforced concrete building, and then 50 liters of water was spread thereover through a hose. After 2 days, it rained, but the roof did not leak water at all.

Apart from this, 2.6 kg of commercially-available, sand-mixed cement (Domestic Cement (trade name) from Tokyo Sun Home Co.) was prepared. This was well mixed with 600 g of water, cast into a mold pattern, and solidified therein to form a molded body as in Fig. 1.

This concrete container was bisected (as in Fig. 2), and the two pieces were then again combined together and reinforced with wire as in Fig. 3. This was filled with water, but immediately leaked water through the joint. 50 g of the viscous liquid prepared above was put into the container and run along the joint. After having been left for 10 minutes, the container was filled up with water, and it did not leak water through the joint. After left for 30 minutes, water was poured out of the container, and the container was dried at 60°C for 3 days. No trace of the permeable water cut-off agent of the present invention was found around the joint and inside the container. The container was again filled up with water, and it did not leak water through the joint. Then, the container thus filled with water was left for 3 days, and it did not still leak water at all through the joint.

### Example C2:

30 g of sodium stearate, 100 g of polyvinyl alcohol (chemical reagent from Wako Junyaku Industry Co.), 50 g of montmorillonite (Kunipure F (trade name) from Kunimine Industry Co.) and 1000 g of water were well mixed to prepare a viscous liquid (this is a permeable water cut-off agent of the present invention). 500 g of this liquid was uniformly spread over the leaky area (about 10 m²) of the roof of a 2-storied, reinforced concrete building in rain. After 20 minutes, the water leak completely stopped.

50 g of the viscous liquid prepared above was put into the same container as in Example C1, and run along the joint. Then, the container was filled up with water, whereupon it leaked water in drops through the joint for about 1 minute, but thereafter the water leak completely stopped. After left for 30 minutes, water was poured out of the container, and the container was dried at 60°C for 3 days. No trace of the permeable water cut-off agent of the present invention was found around the joint and inside the container. The container was again filled up with water, and it did not leak water through the joint. Then, the container thus filled with water was left for 3 days, and it did not still leak water at all through the joint.

### Example C3:

30 g of Emal 10 Powder (trade name, from Kao Corp., having an essential component of sodium laurylsulfate), 100 g of polyvinyl alcohol (Gohsenol GM-14 (trade name) from Nippon Synthetic Chemical Industry Co.), 30 g of smectite (Smecton (trade name) from Kunimine Industry Co.) and 1500 g of water were well mixed to prepare a viscous liquid (this is a permeable water cut-off agent of the present invention). 1000 g of this liquid was uniformly spread over the leaky area (about 12 m²) of the roof terrace of the 4th floor of a 5-storied, reinforced concrete building, and then 20 liters of water was spread thereover. The next day, it rained, but the roof terrace did not leak water.

50 g of the viscous liquid prepared above was put into the same container as in Example C1, and run along the joint. Then, the container was filled up with water, whereupon it leaked water in drops through the joint for about 1 minute, but thereafter the water leak completely stopped. After left for 30 minutes, water was poured out of the container, and the container was dried at 60°C for 3 days. After cooled to room temperature, the container was again filled up with water, and it did not leak water through the joint. Then, the container thus filled with water was left for 3 days, and it did not still leak water at all through the joint.

### Example D1:

Fig. 4 shows one example of an opening as formed in the outer wall of a construction, through which the permeable water cut-off agent of the present invention is injected into the wall of the construction. As illustrated, the concrete base 7 is coated with the heat-insulating material 6 and the concrete layer 5 for holding the heat-insulating material 6, in that order. The concrete base 7 is composed of concrete slabs as jointed via a waterproof asphalt joint 8. An opening 4 is formed above the joint 8, through which the permeable water cut-off agent could be directly applied to the joint 8. The concrete substrate 7, the heat-insulating material 6 and the concrete layer 5 are not specifically defined with respect to their type and quality, and these may be any ones generally used in ordinary constructions.

Water leak was found in the flat roof of a 3-storied, reinforced concrete building. The roof comprises reinforced concrete slabs as jointed via waterproof asphalt joints, and the jointed slabs are covered with a heat-insulating layer of styrol foam (thickness: 4 cm) and a concrete layer (thickness: 7 cm) for holding the heat-insulating layer, in that order. As in Fig. 4, an opening (width 2 cm x length 5 cm x depth 11 cm) was formed, passing through the heat-insulating material holding concrete layer and the heat-insulating material to reach the waterproof asphalt joint via which the concrete slabs were jointed. One kg of the same permeable water cut-off agent as in Example A1 was injected into the opening, and then 20 liters of water was injected thereinto. After 7 days, it rained, and the roof did not leak water.

### Example E1:

15 g of sodium stearate, 10 g of sodium polyacrylate (Panakayaku F (trade name) from Nippon Kayaku Co.) and 2000 g of water were well mixed to prepare a viscous liquid. This was a composition A.

5 g of sodium stearate, 70 g of bentonite (Superben (trade name) from Hojun Mining Co.) and 2000 g of water were well mixed to prepare a viscous liquid. This was a composition B.

1000 g of the composition A was uniformly spread over the leaky area (about 2 m²) of the roof of a 3-storied, reinforced concrete building, and then 1000 g of the composition B was spread thereover. Then, 10 liters of water was spread over it through a hose. After 8 days, it rained, and the roof did not leak water at all.

The same container as in Example A1 was brushed with 20 g of the composition A and then with 20 g of the composition B, on its inner surface around the joint. After one hour, the container was filled up with water, and it did not leak water. After having been left for 30 minutes, water was poured out of the container, and the container was dried at 60°C for 3 days. After having been cooled to room temperature, the container was again filled up with water. In that condition, the container did not leak water through the joint. Then, the container thus filled with water was left for 3 days, and it did not still leak water through the joint.

400 g of the composition A and 400 g of the composition B were well stirred and mixed, and put into a container, sealed and kept as such. Apart from this, 400 g of the composition A and 400 g of the composition B were separately put into different containers, also sealed and kept as such. After one month, the mixture of the composition A and the composition B gave a precipitate at the bottom of the container, while the compositions having been stored separately gave no precipitate.

### Example E2:

5 g of sodium stearate, 5 g of Emal 10 Powder (trade name, from Kao Corp., having an essential component of sodium lauryl sulfate), 20 g of sodium alginate (chemical reagent from Wako Junyaku Industry Co.) and 2000 g of water were well mixed to prepare a viscous liquid. This was a composition A.

3 g of sodium stearate, 3 g of Emal 10 Powder (trade name, from Kao Corp., having an essential component of sodium lauryl sulfate), 20 g of smectite (Smecton (trade name) from Kunimine Industry Co.) and 2000 g of water were well mixed to prepare a viscous liquid. This was a composition B.

1000 g of the composition A was uniformly spread over the leaky area (about 3 m²) of the roof terrace of the 2nd floor of a 2-storied, reinforced concrete building, and then 1000 g of the composition B was spread thereover. Then, 10 liters of water was spread over it through a hose. After 6 days, it rained, and the roof terrace did not leak water at all.

### Example F1:

3.0 kg of commercially-available, sand-mixed cement (Asoh Domestic Cement (trade name) from Asoh Cement Co.) was prepared. This was well mixed with 800 g of water, cast into a mold pattern, and solidified therein to form a molded body as in Fig. 1.

This concrete container was bisected, and the bottom of each piece was further cut at the cracked edge (as in Fig. 2), and the two pieces were then again combined together and reinforced with wire as in Fig. 3, in which the gap between the jointed edges of the two pieces at the bottom was from 0.7 to 1.5 cm. The bisected container was again separated into the individual two pieces, and the inner surface of the side of the joint was sealed with an oily caulking material (Polycaulk (trade name) from Cemedine Co.).

A piece of urethane sponge (cross section: 2.5 x 2.5 cm density: 0.22 g/cm³) was put into the joint at the bottom, while being sandwiched between the two pieces. The two pieces were then combined together and reinforced with wire as in Fig. 3. Having received water in that condition, the container immediately leaked water through the joint. Water was removed from the container, and 50 g of the permeable water cut-off agent of the present invention that had been prepared in Example A1 was poured into the container so that it was impregnated into the urethane sponge. After one hour, the container was filled up with water, and it did not leak water. After having been left for 15 hours, the container was checked at its bottom. No trace of water leaks was found.

Water was poured out of the container, and the container was dried at 60°C for 3 days. After having been cooled to room temperature, the container was again filled up with water. In that condition, the container did not leak water through the joint. Then, the container thus filled with water was left for 3 days, and it did not still leak water through the joint.

### Example F2:

A piece of urethane sponge (cross section 2.5 x 2.5 cm x length 12 cm, density: 0.22 g/cm³) was prepared, and 11 g of the permeable water cut-oft agent of the present invention that had been prepared in Example A2 was impregnated into this, and then dried at 50°C for 24 hours to obtain a water cut-off material of the present invention.

The same bisected container as in Example F1, except that the gap between the jointed edges of the two pieces at the bottom was from 0.8 to 1.6 cm, was separated into the individual two pieces. The water cut-off material prepared above was put into the joint at the bottom of the container, while the inner surface of the side of the joint was coated with an oily caulking material (Polycaulk (trade name) from Cemedine Co.), and the two pieces were combined together and reinforced with wire as in Fig. 3. Having received water in that condition, the container did not leak water. This was left as such for 15 hours, and checked at its bottom. No trace of water leaks was found.

### Example F3:

A piece of urethane sponge (cross section 2.5 x 2.5 cm x length 12 cm, density: 0.22 g/cm³) was prepared, and 11 g of a permeable water cut-off agent, which had been prepared in the same manner as in Example A3 except that the amount of calcium acetate used had been 2 g, was impregnated into this, and then dried at 50°C for 24 hours to obtain a water cut-off material of the present invention.

The same bisected container as in Example F1, except that the gap between the jointed edges of the two pieces at the bottom was from 0.5 to 1.3 cm, was separated into the individual two pieces. The water cut-off material prepared above was put into the joint at the bottom of the container, while the inner surface of the side of the joint was coated with an oily caulking material (Polycaulk (trade name) from Cemedine Co.), and the two pieces were combined together and reinforced with wire as in Fig. 3. Having received water in that condition, the container did not leak water. This was left as such for 15 hours, and checked at its bottom. No trace of water leaks was found.

Water was poured out of the container, and the container was dried at 60°C for 3 days. After having been cooled to room temperature, the container was again filled up with water. In that condition, the container did not leak water through the joint. Then, the container thus filled with water was left for 3 days, and it did not still leak water through the joint.

### Example G1:

The same bisected container as in Example F1, except that the gap between the jointed edges of the two pieces at the bottom was from 0.5 to 3 mm, was separated into the individual two pieces. With 0.66 g (225 m²) of non-woven fabric (Bencot (trade name) from Asahi Chemical Co.) being put into the joint between them, the two pieces were combined together and reinforced with wire as in Fig. 3. Having received water in that condition, the container immediately leaked water through the joint. The container was again separated into the individual two pieces, and the two pieces were still again combined together as in Fig. 3 with 0.66 g (225 m²) of non-woven fabric (Bencot (trade name) from Asahi Chemical Co.), into which 4 g of the permeable water cut-off agent as prepared in Example A1 had been impregnated, being attached onto the inner surface of the joint of the container. After one hour, the container was filled up with water, and it did not leak water. After having been left for 30 minutes, water was poured out of the container. Then, the container was dried at 60°C for 3 days. After cooled to room temperature, the container was again filled up with water. In that condition, the container did not leak water through the joint. Then, the container thus filled with water was left for 3 days, and it did not still leak water through the joint.

### Example G2:

The same container as in Example G1 was tested herein in the same manner as in Example G1, except that the gap between the jointed edges of the two pieces at the bottom of the container was from 0.5 to 2 mm and that the permeable water cut-off agent having been prepared in Example A2 was used. The water cut-off material of the present invention was attached to the joint as in Fig. 3. After one hour, the container was filled up with water, and it did not leak water. After having been left for 30 minutes, water, was poured out of the container. Then, the container was dried at 60°C for 3 days. After cooled to room temperature, the container was again filled up with water. In that condition, it did not leak water through the joint. Then, the container thus filled with water was left for 3 days, and it did not still leak water through the joint.

### Example G3:

The same container as in Example G1 was tested herein in the same manner as in Example G1, except that the non-woven fabric was previously attached to the joint of the container and was brushed with 20 g of the permeable water cut-off agent having been prepared in Example A3. After having been kept in the condition as in Fig. 3 for 1 hour, the container was filled up with water, and it did not leak water. After left for 30 minutes, water was poured out of the container. Then, the container was dried at 60°C for 3 days. After cooled to room temperature, the container was again filled up with water. In that condition, it did not leak water through the joint. Then, the container thus filled with water was left for 3 days, and it did not still leak water through the joint.

### Example G4:

A piece of cotton rope having a diameter of 3 mm was put into the joint of the same container as in Example G1, at the center line of the inner surface, and the container was reconstructed as in Fig. 3. Having received water in that condition, the container immediately leaked water through the joint. Next, 10 g of the permeable water cut-off agent having been prepared in Example A4 was dripped into the gap of the joint on the inner surface of the container. After one hour, the container was filled up with water, and it did not leaked water. After left for 30 minutes, water was poured out of the container. Then, the container was dried at 60°C for 3 days. After cooled to room temperature, the container was again filled up with water. In that condition, it did not leak water through the joint. Then, the container thus filled with water was left for 3 days, and it did not still leak water through the joint.

### Example G5:

The permeable water cut-off agent having been prepared in Example A5 was applied onto one surface (easily adhesive surface) of a polyester film (Toyobo Ester Film (trade name) from Toyo Spinning Co.) having a length of 40 cm, a width of 3 cm and a thickness of 16 µm to form thereon a layer of the agent having a thickness of about 0.5 mm. Without being dried, the film was attached onto the inner joint of the same concrete container as in Example G1. The container was left at room temperature for 3 days to be dried, and filled up with water, and this did not leak water. After left for 30 minutes, water was poured out of the container. Then, the container was dried at 60°C for 3 days. After cooled to room temperature, the container was again filled up with water. In that condition, it did not leak water through the joint. Then, the container thus filled with water was left for 3 days, and it did not still leak water through the joint.

### Example H1:

5 g of sodium polyacrylate (Panakayaku F (trade name) from Nippon Kayaku Co.) and 50 g of bentonite (Superben (trade name) from Hojun Mining Co.) were well mixed, and 5 g of the resulting mixture was rollwise wrapped with a piece of knitted cotton fabric having a size of 15 cm x 10 cm into a roll having a length of 15 cm and a diameter of 1.5 cm. The both ends of the roll were closed with thread to prepare a water cut-off material of the present invention.

The same bisected container as in Example F1 was separated into the individual two pieces. The water cut-off material prepared above (outer diameter: 1.5 cm, density: 0.22 g/cm³) was put into the joint at the bottom of the container, while the inner surface of the side of the joint was coated with an oily caulking material (Polycaulk (trade name) from Cemedine Co.), and the two pieces were combined together and reinforced with wire as in Fig. 3. In that condition, the container was filled up with water, whereupon it leaked a few ml of water through the joint, but the water leak stopped in one hour. The container was left as such for 15 hours, and checked at its bottom. No trace of water leaks was found.

Water was poured out of the container, and the container was dried at 60°C for 3 days. After having been cooled to room temperature, the container was again filled up with water. In that condition, the container did not leak water through the joint. Then, the container thus filled with water was left for 3 days, and it did not still leak water through the joint.

### Example H2:

2 g of sodium stearate, 2 g of Emal 10 Powder (trade name, from Kao Corp., having an essential component of sodium laurylsulfate), 10 g of sodium alginate (chemical reagent from Wako Junyaku Industry Co.), 30 g of smectite (Smecton (trade name) from Kunimine Industry Co.) and 20 g of sepiolite (Adeplus SP (trade name) from Mizusawa Industry Co.) were well mixed.

A piece of knitted cotton fabric having a size of 15 cm x 7 cm was folded and formed into a bag having a length of 15 cm and an inner diameter of 1 cm. 5 g of the mixture prepared above was put into the bag, of which the both ends were closed with thread to prepare a water cut-off material of the present invention.

The same bisected container as in Example F1, except that the gap between the jointed edges of the two pieces at the bottom was from 0.8 to 1.6 cm, was separated into the individual two pieces. The water cut-off material prepared above (outer diameter: 1.5 cm, density: 0.22 g/cm³) was put into the joint at the bottom of the container, while the inner surface of the side of the joint was coated with an oily caulking material (Polycaulk (trade name) from Cemedine Co.), and the two pieces were combined together and reinforced with wire as in Fig. 3. In that condition, the container was filled up with water, whereupon it leaked a few ml of water through the joint, but the water leak stopped in one hour. The container was left as such for 15 hours, and checked at its bottom. No trace of water leaks was found.

Water was poured out of the container, and the container was dried at 60°C for 3 days. After having been cooled to room temperature, the container was again filled up with water. In that condition, the container did not leak water through the joint. Then, the container thus filled with water was left for 3 days, and it did not still leak water through the joint.

### Example I1:

10 g of sodium stearate, 5 g of sodium polyacrylate (Panakayaku F (trade name) from Nippon Kayaku Co.), 30 g of bentonite (Superben (trade name) from Hojun Mining Co.) and 1000 g of water were well mixed to prepare a viscous liquid.

Apart from this, 3.0 kg of commercially-available, sand-mixed cement (Asoh Domestic Cement (trade name) from Asoh Cement Co.) was prepared. This was well mixed with 700 g of the liquid prepared above to obtain a mortar composition of the present invention. The composition was cast into a mold pattern, and solidified therein to form a hardened body as in Fig. 1.

This concrete container was bisected (as in Fig. 2), and the two pieces were then again combined together and reinforced with wire as in Fig. 3. Having received water in that condition, this immediately leaked water through the joint, but the water leak stopped in about 5 minutes. Then, the container was filled up with water, but did not leak water. After having been left for 30 minutes, water was poured out of the container, and the container was dried at 60°C for 3 days. After cooled to room temperature, the container was again filled up with water. In that condition, the container did not leak water through the joint. Then, the container thus filled with water was left for 3 days, and it did not still leak water through the joint.

### Example I2:

The same test as in Example I1 was repeated, except that a viscous liquid having been prepared by well mixing 5 g of sodium stearate, 5 g of Emal 10 Powder (trade name, from Kao Corp., having an essential component of sodium laurylsulfate), 20 g of sodium carboxymethyl cellulose (chemical reagent from Wako Junyaku Industry Co.), 40 g of smectite (Synthetic Smectite SWF (trade name) from Co-op Chemical Co.) and 1000 g of water was used herein. The container in the condition as in Fig. 3 received water, but immediately leaked water through the joint. However, the water leak stopped in about 5 minutes. Then, the container was filled up with water, but did not leak water. After having been left for 30 minutes, water was poured out of the container, and the container was dried at 60°C for 3 days. After cooled to room temperature, the container was again filled up with water. In that condition, the container did not leak water through the joint. Then, the container thus filled with water was left for 3 days, and it did not still leak water through the joint.

### Example I3:

The same test as in Example I1 was repeated, except that a viscous liquid having been prepared by well mixing 20 g of Emal 10 Powder (trade name, from Kao Corp., having an essential component of sodium laurylsulfate), 10 g of sodium carboxymethyl cellulose (chemical reagent from Wako Junyaku Industry Co.), 3 g of aluminium sulfate and 1000 g of water was used herein. The container in the condition as in Fig. 3 received water, but immediately leaked water through the joint. However, the water leak stopped in about 10 minutes. Then, the container was filled up with water, but did not leak water. After having been left for 30 minutes, water was poured out of the container, and the container as dried at 60°C for 3 days. After cooled to room temperature, the container was again filled up with water. In that condition, the container did not leak water through the joint. Then, the container thus filled with water was left for 3 days, and it did not still leak water through the joint.

### Example I4:

The same test as in Example I1 was repeated, except that a viscous liquid having been prepared by well mixing 20 g of sodium oleate, 10 g of sodium carboxymethyl cellulose (chemical reagent from Wako Junyaku Industry Co.), 50 g of bentonite (Superben (trade name) from Hojun Mining Co.) and 1000 g of water was used herein. The container in the condition as in Fig. 3 received water, but immediately leaked water through the joint. However, the water leak stopped in about 10 minutes. Then, the container was filled up with water, but did not leak water. After having been left for 30 minutes, water was poured out of the container, and the container was dried at 60°C for 3 days. After cooled to room temperature, the container was again filled up with water. In that condition, the container did not leak water through the joint. Then, the container thus filled with water was left for 3 days, and it did not still leak water through the joint.

### Example J1:

10 g of sodium stearate, 7 g of sodium polyacrylate (Panakayaku F (trade name) from Nippon Kayaku Co.), 70 g of bentonite (Superben (trade name) from Kunimine Industry Co.) and 1000 g of water were well mixed to prepare a viscous liquid a1. Next, 25 g of sepiolite (Adeplus SP (trade name) from Mizusawa Chemical Industry Co., having a single fiber diameter of 0.2 µm and a single fiber length of from 5 to 10 µm) and 100 g of water were well mixed to prepare a viscous liquid b1.

500 g of the liquid a1 and 120 g of the liquid b1 were stirred and mixed to prepare a viscous suspension c1, in which the sepiolite-containing liquid b1 moiety was in a phase-separated condition.

Apart from this, 3.0 kg of commercially-available, sand-mixed cement (Asoh Domestic Cement (trade name) from Asoh Cement Co.) was prepared. This was well mixed with 700 g of water, cast into a mold pattern, and solidified therein to form a molded body as in Fig. 1.

This concrete container was bisected (as in Fig. 2), and the two pieces were then again combined together with a spacer of 1 mm thick being put into the gap between the jointed edges of the two pieces so that the width of the gap could be 1 mm, and reinforced with wire, as in Fig. 3. Having received water in that condition, the container immediately leaked water through the joint. The container was brushed with 20 g of the permeable water cut-off agent c1 haying been prepared in the above according to the production method of the present invention, on its inner surface around the joint. After one hour, the container was filled up with water, and it did not leak water. After having been left for 30 minutes, water was poured out of the container, and the container was dried at 60°C for 3 days. After cooled to room temperature, the container was again filled up with water. In that condition, the container did not leak water through the joint. Then, the container thus filled with water was left for 3 days, and it did not still leak water through the joint.

### Example J2:

5 g of sodium stearate, 5 g of Emal 10 Powder (trade name, from Kao Corp., having an essential component of sodium laurylsulfate), 15 g of sodium carboxymethyl cellulose (chemical reagent from Wako Junyaku Industry Co.), 50 g of smectite (Hydrophilic Smectite SWF (trade name) from Co-op Chemical Co.) and 1000 g of water were well mixed to prepare a viscous liquid a2. Apart from this, 25 g of sepiolite (Adeplus SP (trade name) from Mizusawa Chemical Industry Co., having a single fiber diameter of 0.2 µm and a single fiber length of from 5 to 10 µm) and 100 g of water were well mixed to prepare a viscous liquid b2.

500 g of the liquid a2 and 120 g of the liquid b2 were stirred and mixed to prepare a viscous suspension c2, in which the sepiolite-containing liquid b2 moiety was in a phase-separated condition.

Next, the same container as in Example J1 was tested in the same manner as therein, except that the viscous liquid c2 prepared above was used in place of the viscous liquid c1. After having been brushed with the viscous liquid c2 and left for 1 hour, the container was filled up with water, and it did not leak water. After having been left such for 30 minutes, water was poured out of the container, and the container was dried at 60°C for 3 days. After cooled to room temperature, the container was again filled up with water. In that condition, the container did not leak water through the joint. Then, the container thus filled with water was left for 3 days, and it did not still leak water through the joint.

### Example J3:

20 g of Emal 10 Powder (trade name, from Kao Corp., having an essential component of sodium laurylsulfate), 5 g of sodium polyacrylate (Panakayaku F (trade name) from Nippon Kayaku Co.), 50 g of smectite (Synthetic Smectite SWF (trade name) from Co-op Chemical Co.) and 1000 g of water were well mixed to prepare a viscous liquid a3. Apart from this, 25 g of spherical magnesium silicate (Mizupearl M (trade name) from Mizusawa Chemical Industry Co., having a mean grain size of 2 µm) and 100 g of water were well mixed to prepare a viscous liquid b3.

500 g of the liquid a3 and 120 g of the liquid b3 were stirred and mixed to prepare a viscous suspension c3, in which the sepiolite-containing liquid b3 moiety was in a phase-separated condition.

Next, the same container as in Example J1 was tested in the same manner as therein, except that the viscous liquid c3 prepared above was used in place of the viscous liquid c1. After having been brushed with the viscous liquid c3 and left for 1 hour, the container was filled up with water, and it did not leak water. After having been left such for 30 minutes, water was poured out of the container, and the container was dried at 60°C for 3 days. After cooled to room temperature, the container was again filled up with water. In that condition, the container did not leak water through the joint. Then, the container thus filled with water was left for 3 days, and it did not still leak water through the joint.

### INDUSTRIAL APPLICABILITY

When applied to cracked mortar or concrete products, the permeable water cut-off agent of the present invention receives water having penetrated into the products through their cracks, whereby the cracks are immediately filled with the water cut-off agent. As a result, water is prevented from penetrating into the products. Therefore, the permeable water cut-off agent is extremely useful for preventing mortar and concrete products from aging. In addition, when the water cut-off material of the present invention is applied to constructions, the permeable water cut-off component constituting it immediately seals the gaps formed at the junctions and the construction joints, and water is prevented from penetrating into the constructions. Further, the permeable water cut-off agent of the present invention can be mixed with pigment or the like so that it may be colored in accordance with the color of the site to be repaired with it, or after having been repaired with it, the site may be painted.

## Claims

1. A permeable water cut-off agent, which comprises a gelable hydrophilic resin and a gellant for said hydrophilic resin.

2. The permeable water cut-off agent as claimed in claim 1, which comprises a surfactant.

3. The permeable water cut-off agent as claimed in claim 2, which comprises a water-insoluble powdery substance.

4. The permeable water cut-off agent as claimed in claim 2, wherein the gelable hydrophilic resin is one or more selected from the group consisting of gelable highly water-absorbing polymers, polyvinyl acetates and polyvinyl alcohols.

5. The permeable water cut-off agent as claimed in any one of claims 1 to 4, which comprises water.

6. The permeable water cut-off agent as claimed in any one of claims 1 to 5, which is thixotropic and has a thixotropic index of not smaller than 1.5.

7. The permeable water cut-off agent as claimed in claim 5 or 6, which comprises a polyalcohol.

8. The permeable water cut-off agent as claimed in claim 1, which comprises a composition A containing both of a gelable hydrophilic resin and a surfactant or the three of a gelable hydrophilic resin, a surfactant and water, and a composition B containing a gellant for said hydrophilic resin or both of a gellant for said hydrophilic resin and water.

9. A method for preventing water leaks, which comprises injecting the permeable water cut-off agent of claim 5 or 6 into a construction through openings formed in the construction.

10. A method for preventing water leaks, which comprises spread either one of a composition A containing a gelable hydrophilic resin, a surfactant and water and a composition B containing a surfactant, a gellant for said hydrophilic resin and water on a part to be spread therewith, followed by spread the other on nearly the same part as previously spread.

11. A water cut-off material as prepared by impregnating the permeable water cut-off agent of claims 5 or 6 into a spongy substance.

12. A water cut-off material as prepared by impregnating the permeable water cut-off agent of claims 5 or 6 into a cloth, a rope, a film or a sheet, through coating or dipping.

13. A water cut-off material as prepared by wrapping the permeable water cut-off agent of any one of claims 1 to 4 with a water-pervious material.

14. A concrete or mortar composition containing the permeable water cut-off agent of claims 5 or 6.

15. A hardened product as prepared by hardening the concrete or mortar composition of claim 14.

16. A method for producing a permeable water cut-off agent, which comprises mixing a gelled composition (composition a) as prepared by mixing a gelable hydrophilic resin, a surfactant, a gellant for said hydrophilic resin and water, and a mixture (composition b) of a water-insoluble powdery substance and water.

17. A permeable water cut-off agent, which comprises one or more gelable hydrophilic resins selected from the group consisting of sodium poly(meth)acrylate, sodium alginate and sodium carboxymethyl cellulose, one or more surfactants, one or more gellants for the hydrophilic resins as selected from the group consisting of Ca-type bentonite, Ca-type montmorillonite and Ca-type smectite, and water, and which has a thixotropic index of not smaller than 1.5.
